# EUROPÄISCHE PATENTSCHRIFT

(11) **EP 3 178 123 B1**
(45) Veröffentlichungstag und Bekanntmachung des Hinweises auf die Patenterteilung: **23.05.2018**
(21) Anmeldenummer: 15745184.0
(22) Anmeldetag: 30.07.2015
(51) Int. Cl.: H01M 10/6554, H01M 10/625, H01M 10/613, H01M 2/10

(54) **RAHMENEINRICHTUNG ZUR AUFNAHME VON SPEICHERZELLEN EINES ENERGIESPEICHERMODULS**
FRAME DEVICE FOR ACCOMMODATING STORAGE CELLS OF AN ENERGY STORAGE MODULE
DISPOSITIF DE CADRE SERVANT À RECEVOIR DES CELLULES DE STOCKAGE D'UN MODULE DE STOCKAGE D'ÉNERGIE

(30) Priorität: 06.08.2014 DE 102014215543
(43) Veröffentlichungstag der Anmeldung: 14.06.2017
(73) Patentinhaber: Robert Bosch GmbH, 70442 Stuttgart (DE)
(72) Erfinder: KOHLBERGER, Markus, 70174 Stuttgart (DE); SCHUETZ, Jonas, 70372 Stuttgart-Bad Cannstatt (DE); LANGE, Ulrich, 72631 Aichtal (DE); JOERG, Nicolai, 70191 Stuttgart (DE); KRASNIQI, Kushtrim, 70439 Stuttgart (DE); SCHWEINBENZ, Jochen, 70469 Stuttgart (DE); PACZKOWSKI, Lukasz, 70372 Stuttgart (DE); LIEPOLD, Dirk, 70184 Stuttgart (DE); BENZ, Steffen, 70197 Stuttgart (DE)
(86) Internationale Anmeldenummer: PCT/EP2015/067450
(87) Internationale Veröffentlichungsnummer: WO 2016/020245

(56) Entgegenhaltungen:
- WO-A1-2014/024431
- US-A1- 2013 183 571
- US-A1- 2013 288 105

## Beschreibung

Die Erfindung betrifft eine Rahmeneinrichtung zur Aufnahme von Speicherzellen eines Energiespeichermoduls, insbesondere eines Batteriemoduls, mit (i) zwei plattenförmigen Abschlusselementen, die zwei einander entlang einer Achse gegenüberliegende Enden der Rahmeneinrichtung bilden und (ii) auf einander gegenüberliegenden Seiten der Rahmeneinrichtung angeordnete Verbindungselemente, die sich von dem einen Ende der Rahmeneinrichtung zu dem anderen Ende der Rahmeneinrichtung erstrecken und die beiden Abschlusselemente über eine Distanz mechanisch verbinden.

### Stand der Technik

Eine derartige Rahmeneinrichtung und ein derartiges elektrisches Energiespeichermodul sind beispielsweise aus der US 8,415,047 B2 bekannt. Diese zeigt ein als Batteriemodul ausgebildetes elektrisches Energiespeichermodul mit einem Stapel von miteinander elektrisch verschalteten prismatische Flachbatteriezellen in einer Rahmeneinrichtung. Die Rahmeneinrichtung weist zwei Abschlussplatten auf, die zwei einander entlang einer Achse gegenüberliegende Enden der Rahmeneinrichtung bilden. Die Rahmeneinrichtung weist weiterhin auf zwei einander gegenüberliegenden Seiten der Rahmeneinrichtung angeordnete Verbindungselemente auf, die sich von dem einen Ende zu dem anderen Ende der Rahmeneinrichtung erstrecken und die beiden Abschlusselemente über die Stapelhöhe des Flachbatteriestapels hinweg mechanisch verbinden. Dazu sind die Enden jedes der Verbindungselemente an der einen Abschlussplatte wie der anderen Abschlussplatte mittels einer Verschraubung verschraubt.

Obwohl Batteriemodule (Akkumulator-Module) die am weitesten verbreiteten Energiespeichermodule zur Speicherung elektrischer Energie sind, umfasst der Begriff Energiespeichermodule neben diesen rein elektrochemischen Energiespeichern auch elektrostatische Energiespeicher (zum Beispiel Kondensatoren) und Hybridspeicher mit einer Kombination aus elektrochemischer und elektrostatischer Energiespeicherung.

Die Speicherzellen einer Batterie beziehungsweise eines Batteriemoduls sind deren Batteriezellen. Eine Batteriezelle, zum Beispiel eine Lithiumzelle, weist typische Betriebsspannungen zwischen 2,5 und 5 Volt auf. Für den Betrieb von Fahrzeugen mit Elektro- oder Hybridantrieb werden jedoch höhere Spannungen benötigt. Für Hochvoltbatteriesysteme von Fahrzeugen werden deshalb einzelne Batteriezellen zu Modulen zusammengefasst und in Serie geschaltet, um ein für das Antriebskonzept geeignetes Spannungsniveau zu erreichen. Insbesondere prismatische, beispielsweise quaderförmige, Lithiumzellen neigen dazu, in Abhängigkeit des Ladezustandes, der Temperatur und der Alterung einen Zellbauch auszubilden. Bei Batteriezellen, insbesondere bei nebeneinander angeordneten Batteriezellen eines Batteriemoduls, führt dies zu einer Längenausdehnung, die einen größeren Bauraum beansprucht. Auch wird die Leistung und die Lebensdauer der Batteriezellen durch die Bildung des Zellbauchs negativ beeinflusst. Um Batteriemodule zu kompaktieren, das heißt eine Längenausdehnung aufgrund der Zellbäuche zu verhindern, ist bekannt, Batteriemodule mit einem Rahmen zu versehen.

Die Dokumente DE 10 2008 059 961 A1 und US 2013/0288105 A1 zeigen weitere Batteriemodule mit Batteriezellen und einer Rahmeneinrichtungen, die die Batteriezellen einfassen. Dabei werden die Elemente der Rahmeneinrichtung auf unterschiedliche Arten aneinander befestigt.

Die erfindungsgemäße Rahmeneinrichtung mit den in Anspruch 1 genannten Merkmalen bietet die Vorteile eines simplen Aufbaus und einer einfachen Montierbarkeit.

Bei der erfindungsgemäßen Rahmeneinrichtung ist vorgesehen, dass jedes der Verbindungselemente zur Verbindung mit den beiden Abschlusselementen an jedem seiner Enden einen quer zu der Achse ausgerichteten Zapfen aufweist, der jeweils in eine Ausnehmung in einem der Abschlusselemente eingreift und dort mittels eines jeweiligen riegelartigen Sicherungselements lösbar fixiert ist. Die Ausnehmungen sind bohrungsartige Löcher in den Abschlusselementen, die bevorzugt in der Plattenebene der plattenartigen Abschlusselemente verlaufen.

Neben den bereits genannten Vorteilen ergeben sich folgende Vorzüge, dass (a) nicht eine einzige Schraube notwendig ist, (b) sich die Montageschritte vereinfachen, da für die Montage kein Werkzeug benötigt wird und (c) auch die Demontage relativ simpel ist, wobei die Elemente der Rahmeneinrichtung wiederverwendet werden können.

Bevorzugt sind alle oder zumindest einige der Elemente der Rahmeneinrichtung aus Kunststoff gefertigt. Dadurch ist das Gewicht der Rahmeneinrichtung gegenüber einer Rahmeneinrichtung aus Metall-Elementen wie etwa Metallstrangguss-Elementen deutlich reduziert.

Gemäß einer vorteilhaften Ausgestaltung der Erfindung sind die riegelartigen Sicherungselemente entweder als an den Zapfen ausgebildete Rastelemente oder als von außen in die Abschlusselemente einbringbare separate Sicherungselemente ausgebildet. Die an den Zapfen ausgebildeten Rastelemente sind beispielsweise Rastnasen, mittels derer sich die Zapfen beim Einschieben in die Ausnehmungen in diesen selbsttätig verrasten (einclipsen). Zum Lösen dieser Rastverbindung ist im Abschlusselement bevorzugt ein Kanal vorgesehen, durch den ein entsprechendes Werkzeug bis zum Rastelement eingeschoben werden kann um dieses zu entriegeln. Die separaten Sicherungselemente sind insbesondere als Sicherungsringe, Sicherungsstifte und/oder Sicherungsklammern ausgebildet. diese werden quer zur Längsausrichtung des entsprechenden Zapfens montiert und blockieren ein herausziehen des Zapfens aus der entsprechenden Ausnehmung.

Gemäß einer weiteren vorteilhaften Ausführungsform der Erfindung ist vorgesehen, dass auf jeder der beiden einander gegenüberliegenden Seiten je zwei Verbindungselemente vorgesehen sind, deren Zapfen in den Abschlusselementen in einander entgegengesetzter Richtung ausgerichtet verlaufen.

Gemäß einer vorteilhaften Weiterbildung der Erfindung weist jedes der Verbindungselemente einen L-förmigen Querschnitt auf und bildet eine Kante der Rahmeneinrichtung. Die Verbindungselemente bilden dadurch eine Klammerkonstruktion, in der die Batteriezellen klammernd gehalten werden.

Gemäß einer vorteilhaften Ausgestaltung der Erfindung ist zwischen zumindest zwei der Verbindungselemente ein Verbindungsteil angeordnet, das sich von dem einen zum anderen der beiden Verbindungselemente erstreckt.

Gemäß einer weiteren vorteilhaften Ausgestaltung der Erfindung weist jede der Abschlusselemente Öffnungen zum Einschieben von Verbindungsstiften auf. Mittels dieser mit einem Endabschnitt in die Öffnungen eingeschobenen Verbindungsstifte und einem Koppelmodul das beidseitig entsprechende Öffnungen zur Aufnahme des jeweils anderen Endabschnitts der Verbindungsstifte aufweist, wird ein serielles mechanisches Aneinanderkoppeln von Energiespeichermodulen ermöglicht.

Mit Vorteil weist die Rahmeneinrichtung an zumindest einer Seite eine Wärmetransportplatte auf, die sich bevorzugt über den kompletten für die Zellen vorgesehenen Axialbereich des Rahmens erstreckt.

Die Erfindung betrifft weiterhin ein elektrisches Energiespeichermodul, insbesondere ein Batteriemodul, mit mehreren miteinander elektrisch verschalteten Speicherzellen und einer die Speicherzellen einfassenden Rahmeneinrichtung, die als eine vorstehend genannte Rahmeneinrichtung ausgebildet ist.

Gemäß einer vorteilhaften Ausgestaltung des erfindungsgemäßen Energiespeichermoduls sind die Speicherzellen des Moduls als prismatische Speicherzellen ausgebildet.

Gemäß einer vorteilhaften Weiterbildung der Erfindung sind die Speicherzellen zwischen den Abschlusselementen der Rahmeneinrichtung entlang der Achse zu einem Speicherzellenstapel gestapelt. Der entsprechende Speicherzellen-Stapel des Moduls wird zwischen den beiden Abschlusselementen eingeklemmt.

Gemäß einer weiteren vorteilhaften Ausgestaltung des erfindungsgemäßen Energiespeichermoduls sind zwischen den Speicherzellen komprimierbare Zwischenelemente und/oder feuerfeste Polymerplatten angeordnet. Bei einer Ausführungsform sind weiterhin auch zwischen den Verbindungselementen und den Speicherzellen komprimierbare Zwischenelemente angeordnet.

Die Erfindung wird im Folgenden anhand von Abbildungen näher erläutert. Es zeigen:
- Figur 1: ein elektrisches Energiespeichermodul mit Speicherzellen und einer Rahmeneinrichtung gemäß einer bevorzugten Ausgestaltung der Erfindung,
- Figur 2: ein Abschlusselement der in Fig. 1 gezeigten Rahmeneinrichtung,
- Figur 3: ein Verbindungselement der in Fig. 1 gezeigten Rahmeneinrichtung,
- Figur 4: Einen Zapfen mit Sicherungseinrichtung eines Verbindungselements,
- Figur 5: eine weitere Darstellung des Energiespeichermoduls,
- Figur 6: eine Detail-Darstellung des Energiespeichermoduls,
- Figur 7: noch eine weitere Darstellung des Energiespeichermoduls,
- Figur 8: eine alternative Ausgestaltung der Abschlusselemente,
- Figur 9: eine schematische Darstellung des Moduls und der auftretenden Kräfte im Betrieb,
- Figur 10: noch eine weitere Darstellung des Energiespeichermoduls,
- Figur 11: eine weitere Darstellung des Energiespeichermoduls,
- Figur 12: eine Darstellung des Energiespeichermoduls aus einem anderen Blickwinkel,
- Figur 13: eine Darstellung des Energiespeichermoduls mit Blick auf eines der Abschlusselemente,
- Figur 14: die Positionen von Öffnungen bei der in Fig. 8 gezeigten alternativen Ausgestaltung der Abschlusselemente und
- Figur 15: zwei Abschlusselemente unterschiedlicher Module und deren mechanische Kopplung über ein Kopplungselement.

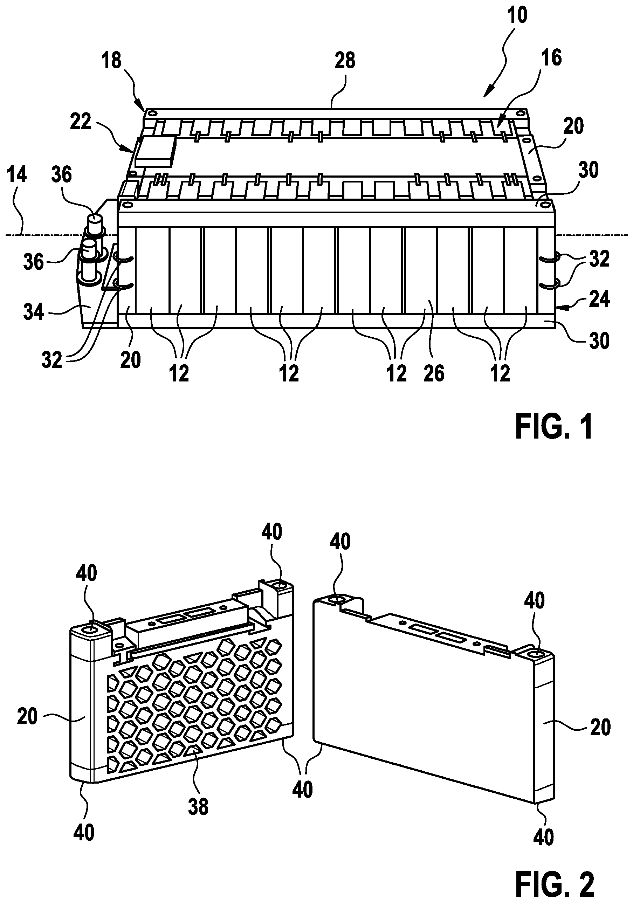

Die Figur 1 zeigt ein als Batteriemodul ausgebildetes elektrisches Energiespeichermodul 10. Dieses elektrische Energiespeichermodul 10 weist mehrere (im Beispiel zwölf) als wiederaufladbare Batteriezellen (Akkumulatorzellen) ausgebildete Speicherzellen 12 auf, die miteinander elektrisch verschaltet sind. Die Speicherzellen 12 sind als prismatische Speicherzellen, genauer gesagt als flache, quaderförmige Speicherzellen 12 ausgebildet, die in Richtung einer Achse 14 hintereinander angeordnet sind und einen Stapel 16 bilden. Dieser Zellstapel 16 wird von einer Rahmeneinrichtung 18 des Energiespeichermoduls 10 eingefasst. Die Rahmeneinrichtung 18 weist an jedem der beiden Enden des Stapels 16 ein plattenförmiges Abschlusselement 20 auf. Diese zwei Abschlusselemente 20 bilden dabei die einander entlang der Achse 14 gegenüberliegenden Enden 22, 24 der Rahmeneinrichtung 18. Die Rahmeneinrichtung 18 weist weiterhin auf zwei ihrer einander gegenüberliegenden Seiten 26, 28 je zwei Verbindungselemente 30 auf, die sich von dem einen Ende 22 zu dem anderen Ende 24 der Rahmeneinrichtung 18 erstrecken und dabei die beiden Abschlusselemente 20 über eine Distanz mechanisch verbinden. In Fig. 1 sind an den Kanten der Abschlusselemente 20 jeweils zwei separate Sicherungselemente 32 erkennbar, deren Funktion im Verlauf der weiteren Figurenbeschreibung erklärt wird. Schließlich weist die in Fig. 1 gezeigte Rahmeneinrichtung 18 noch eine als Wärmetransportplatte 34 ausgebildete Bodenplatte aus. In der Wärmetransportplatte 34 befindet sich ein (nicht gezeigter) Fluidkanal, von dem jedoch nur die Fluid-Anschlüsse 36 am Ende 22 der Rahmeneinrichtung 18 sichtbar sind.

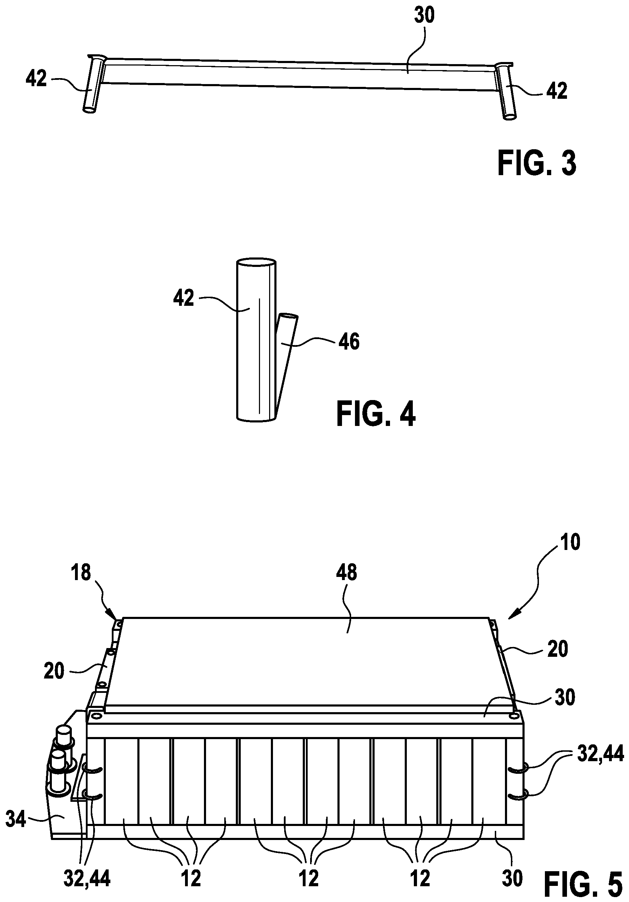

Die Fig. 2 zeigt ein Abschlusselement 20 der Rahmeneinrichtung 18, wobei auf der linken Seite der Fig. 2 die eine Seite und auf der rechten Seite der Fig. 2 die andere Seite dieses Abschlusselements 20 gezeigt ist. Das plattenförmige Abschlusselement 20 weist auf seiner einen Seite eine wabenförmige Struktur 38 auf, während es auf seiner anderen Seite glatt ist. Alternativ zur Wabenförmigen Struktur 38 kann das Abschlusselement 20 aber auch anders strukturiert sein. Die strukturierte Seite dient als Außenseite der Rahmeneinrichtung. An der schmalen Ober- und der Unterseite des plattenförmigen Abschlusselements 20 befindet sich an jedem Ende eine bohrungsartige Ausnehmung 40 für je einen der in Fig. 3 gezeigten Zapfen 42 der Verbindungselemente 30.

Die Fig. 3 zeigt eines der entsprechenden Verbindungselemente 30. Jedes der Verbindungselemente 30 weist zur Verbindung mit den beiden Abschlusselementen 20 an jedem seiner Enden einen quer zu seiner Längsachse ausgerichteten Zapfen 42 auf, mit dem das Verbindungselement 30 zur Verbindung mit dem jeweiligen Abschlusselement 20 in eine von dessen kanalartigen Ausnehmungen 40 eingreifen kann.

Um nun die Verbindung zwischen jeweiligem Abschlusselement 20 und Verbindungselement 30 zu fixieren ist besagtes riegelartiges Sicherungselement 32 vorgesehen, das ein herausziehen des in die Ausnehmung 40 eingeschobenen Zapfens 42 aus dieser Ausnehmung 40 mit einer quer zur Ausrichtung des Zapfens 42 wirkenden Riegelstruktur verhindert. Dabei können die riegelartigen Sicherungselemente 32 beispielsweise -wie in Fig. 1 gezeigt- als von außen in die Abschlusselemente 20 einbringbare separate Sicherungselemente 44 sein. Das Verbindungselement 30 weist zumindest in einem Mittelteil zwischen den beiden Zapfen 42 einen L-förmigen Querschnitt auf um eine Kante der Rahmeneinrichtung 18 zu bilden.

In Fig. 4 ist eine alternative Ausgestaltung des Sicherungselements 32 gezeigt. Dieses Sicherungselement 32 ist ein am Zapfen 42 ausgebildetes Rastelement 46, das eine (nicht gezeigte) Haltestruktur in der Ausnehmung 40 hintergreift oder den Zapfen 42 in der Ausnehmung 40 über Federkräfte zumindest verspannt.

Die Figuren 5 bis 15 zeigen weitere Aspekte des Energiespeichermoduls 10 sowie dessen Rahmeneinrichtung 18, sodass im Weiteren hauptsächlich auf die Unterschiede der einzelnen Ausführungsformen eingegangen wird.

Die Fig. 5 zeigt ein elektrisches Energiespeichermodul 10, das im Wesentlichen dem der Fig. 1 entspricht. Es zeigt den von der Rahmeneinrichtung 18 eingefassten Zell-Stapel 16 aus mehreren Speicherzellen 12. Neben den Abschlusselementen 20, den Verbindungselementen 30 und der als Bodenplatte ausgebildeten Wärmetransportplatte 34 umfasst die Rahmeneinrichtung 18 der Fig. 5 weiterhin noch einen Deckel 48, der die Kontakte der Zellen 12 sowie einen Modul-Controller abdeckt.

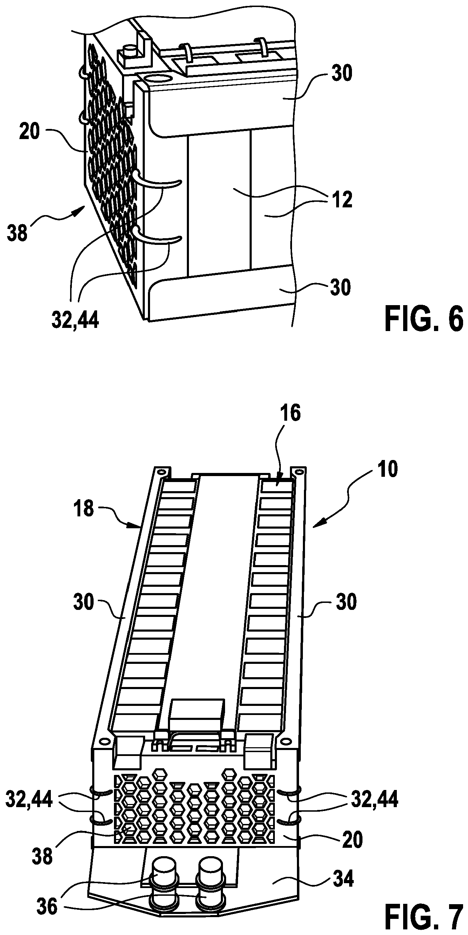

Die Fig. 6 zeigt die Verbindung zwischen plattenförmigem Abschlusselement 20 und den die Kanten der Zellen 12 klammernd umgreifenden Verbindungselementen 30 mittels der separaten Sicherungselemente 44 noch einmal im Detail.

In Fig. 7 ist das Energiespeichermodul 10 noch einmal aus anderer Perspektive gezeigt. Dabei ist -wie auch schon in der Fig. 6- die nach außen gewandte strukturierte Seite des Abschlusselements 20 mit der Struktur 38 (Wabenstruktur) gut erkennbar.

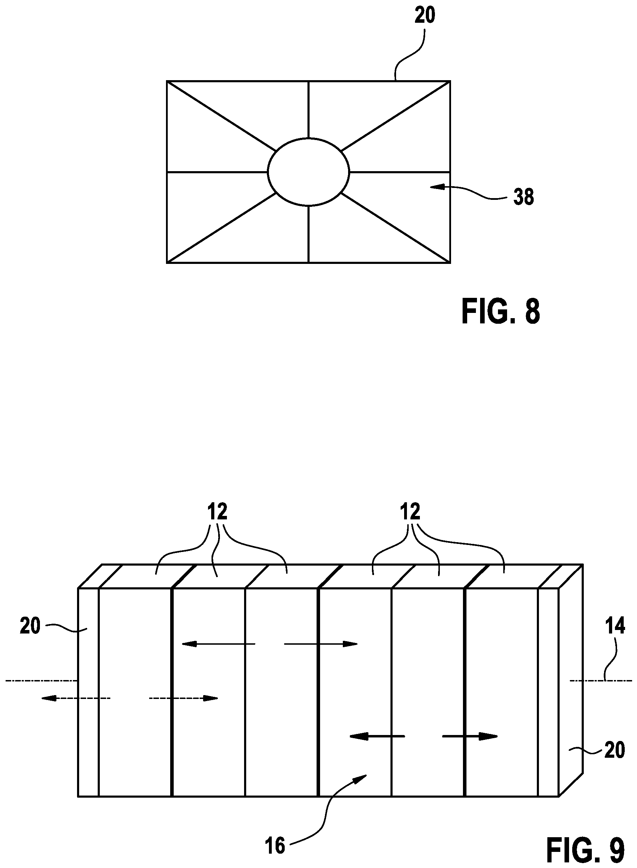

Die Fig. 8 zeigt eine alternative Ausgestaltung der Struktur der strukturierten Seite eines Abschlusselements 20. Bei dieser Struktur laufen acht Rippen sternförmig auf einen zentralen Punkt zu. Mittels dieser Struktur können die durch den Betrieb der Zellen 12 auftretenden Expansionskräfte besonders gut kompensiert werden.

Die entsprechenden Kräfte sind in der schematischen Darstellung der Fig. 9 skizziert. Diese zeigt den Zellstapel 16 der entlang der Achse 14 gestapelten Speicherzellen 12 sowie die als Anschlussplatten ausgebildeten Abschlusselemente 20 an den einander entgegengesetzten Enden 22, 24 der Rahmeneinrichtung 18.

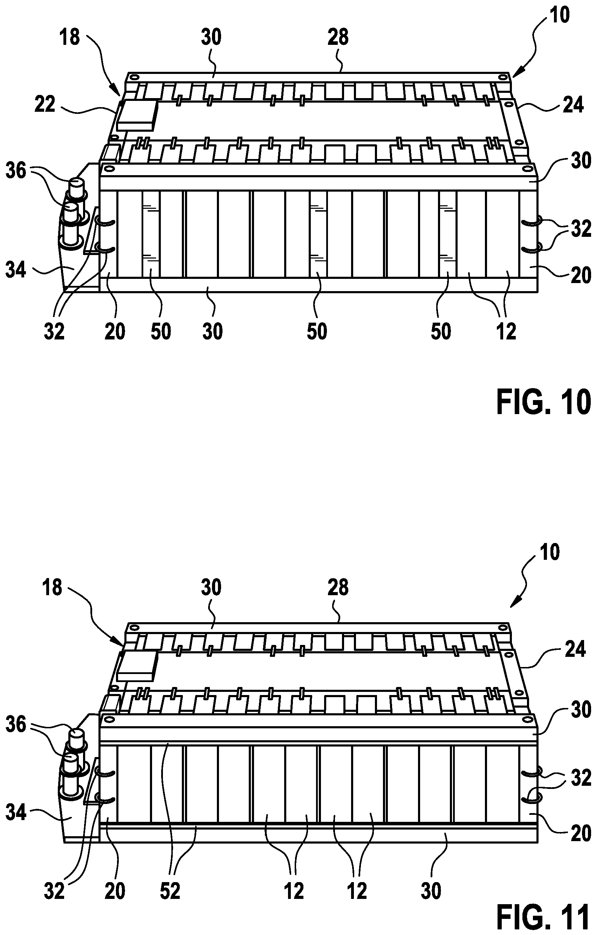

Optionale Verbindungsteile 50 zum Verbinden der Verbindungselemente 30 einer Seite 26, 28 der Rahmeneinrichtung 18 sind in Fig. 10 gezeigt. Die Verbindungsteile 50 sind zwischen den beiden Verbindungselementen 30 angeordnet und erstrecken sich von dem einen zum anderen der beiden Verbindungselemente 30. Dadurch ergibt sich eine höhere Stabilität in Richtung zwischen den beiden Verbindungsteilen 50.

Zusätzliche strukturelle Stabilität in allen Richtungen kann durch zusätzliche komprimierbare Zwischenelemente 52, beispielsweise Zwischenschichten, erreicht werden. Die Fig. 11 zeigt ein Energiespeichermodul mit entsprechenden komprimierbaren Zwischenelementen 52. Diese komprimierbare Zwischenelemente 52 aus elastischem Material sind zwischen den einzelnen Speicherzellen 12 und/oder zwischen den Verbindungselementen 30 und den Speicherzellen 12 angeordnet. Die Zwischenelemente 52 sind bevorzugt aus komprimierbarem und/oder feuerfestem Material wie beispielsweise Polymermaterialien (z.B. Aramid). Die zwischen den Speicherzellen 12 und Verbindungselementen 30 angeordneten Zwischenelemente 52 eliminieren die strukturellen Unterschiede zwischen den als Klammern wirkenden Verbindungselementen 30 und den Speicherzellen 12. Alternativ oder zusätzlich sind die Zwischenelemente 52 elektrisch wie thermisch isolierend.

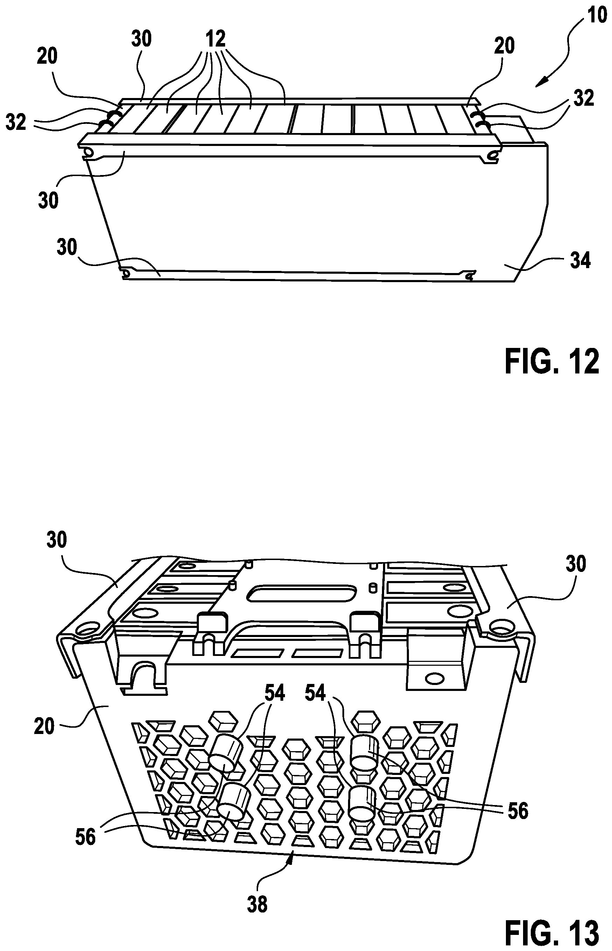

Die Fig. 12 zeigt die Unterseite des Energiespeichermoduls 10 mit der als Bodenplatte ausgebildeten Wärmetransportplatte 34. In der Regel sind elektrisch isolierende Elemente zwischen den Speicherzellen 12 und der Wärmetransportplatte 34 angeordnet. Die Speicherzellen sind oftmals an allen Seiten mit einem (Farb-)Lack oder einer Polymerschicht überzogen. Alternativ sind die Zellen 12 in Polymerbeutel gepackt. Die Speicherzellen 12 sind auf der Oberseite der als Bodenplatte des Energiespeichermoduls 10 ausgebildeten Wärmetransportplatte 34 angeordnet. Zwischen der Platte 34 und den Speicherzellen 12 ist optional eine elektrische Isolation angeordnet sein.

Die Fig. 13 zeigt eine Darstellung des einen Endes 22 des Energiespeichermoduls 10 mit Blick auf eines der Abschlusselemente 20. Das Abschlusselement 20 weist die bereits in Fig. 2 gezeigte wabenförmige Struktur 38 auf, wobei diese Struktur Öffnungen 54 zum Einschieben von Verbindungsstiften 56 bildet. Im Beispiel der Fig. 13 sind vier solche Verbindungsstifte 56 in die von der wabenförmigen Struktur 38 gebildeten Öffnungen 54 eingesteckt.

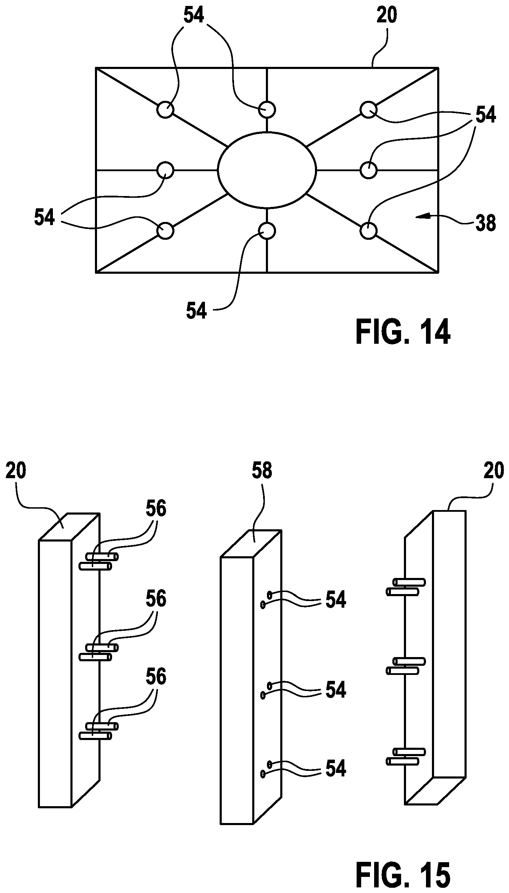

In der Fig. 14 sind die Positionen der Öffnungen 54 bei der in Fig. 8 gezeigten alternativen Ausgestaltung der Abschlusselemente 20 gezeigt. Dabei sind acht Öffnungen 54 vorgesehen, die jeweils auf einer der Rippen positioniert sind und die in Form eines Rechtecks angeordnet sind.

Die Fig. 15 zeigt in einer schematischen Darstellung zwei Abschlusselemente 20 unterschiedlicher Energiespeichermodule 10 und deren mechanische Kopplung über ein Koppelmodul 58. Über die Struktur 38 weist jedes der Abschlusselemente 20 Öffnungen 54 zum Einschieben von Verbindungsstiften 56 auf. Mittels dieser mit einem Endabschnitt in die Öffnungen 54 eingeschobenen Verbindungsstifte 56 und dem Koppelmodul 58 das beidseitig entsprechende Öffnungen 54 zur Aufnahme des jeweils anderen Endabschnitts der Verbindungsstifte 56 aufweist, wird ein serielles mechanisches Aneinanderkoppeln von Energiespeichermodulen ermöglicht.

## Patentansprüche

1. Rahmeneinrichtung (18) zur Aufnahme von Speicherzellen (12) eines Energiespeichermoduls (10), insbesondere eines Batteriemoduls, mit
- zwei plattenförmigen Abschlusselementen (20), die zwei einander entlang einer Achse (14) gegenüberliegende Enden (22, 24) der Rahmeneinrichtung (18) bilden,
- auf einander gegenüberliegenden Seiten (26, 28) der Rahmeneinrichtung (18) angeordnete Verbindungselemente (30), die sich von dem einen Ende (22)zu dem anderen Ende (24) der Rahmeneinrichtung der Rahmeneinrichtung (18) erstrecken und die beiden Abschlusselemente (20) über eine Distanz mechanisch verbinden, **dadurch gekennzeichnet, dass**
jedes der Verbindungselemente (30) zur Verbindung mit den beiden Abschlusselementen (20) an jedem seiner Enden einen quer zu der Achse (14) ausgerichteten Zapfen (42) aufweist, der jeweils in eine Ausnehmung (40) in einem der Abschlusselemente (20) eingreift und dort mittels eines jeweiligen riegelartigen Sicherungselements (32) lösbar fixiert ist.

2. Rahmeneinrichtung nach Anspruch 1, **dadurch gekennzeichnet, dass** die riegelartigen Sicherungselemente (32) als
- am Zapfen (42) ausgebildete Rastelemente (46) oder
- als von außen in die Abschlusselemente (20) einbringbare separate Sicherungselemente (44)
ausgebildet sind.

3. Rahmeneinrichtung nach Anspruch 2, **dadurch gekennzeichnet, dass** die separaten Sicherungselemente (44) als Sicherungsstifte, Sicherungsbügel oder Sicherungsringe ausgebildet sind.

4. Rahmeneinrichtung nach einem der Ansprüche 1 bis 3, **dadurch gekennzeichnet, dass** auf jeder der beiden einander gegenüberliegenden Seiten (26, 28) je zwei Verbindungselemente (30) vorgesehen sind, deren Zapfen (42) in den Abschlusselementen (20) in einander entgegengesetzter Richtung ausgerichtet verlaufen.

5. Rahmeneinrichtung nach einem der vorhergehenden Ansprüche, **dadurch gekennzeichnet, dass** jedes der Verbindungselemente (30) einen L-förmigen Querschnitt aufweist, und eine Kante der Rahmeneinrichtung (18) bildet.

6. Rahmeneinrichtung nach einem der Ansprüche 1 bis 5, **dadurch gekennzeichnet, dass** zumindest eine der Abschlusselemente (20) Öffnungen (54) zum Einschieben von Verbindungsstiften (56) aufweist.

7. Elektrisches Energiespeichermodul (10), insbesondere Batteriemodul, mit mehreren miteinander elektrisch verschalteten Speicherzellen (12) und einer die Speicherzellen (12) einfassenden Rahmeneinrichtung (18), **dadurch gekennzeichnet, dass** diese Rahmeneinrichtung (18) als eine Rahmeneinrichtung (18) gemäß einem der vorhergehenden Ansprüche ausgebildet ist.

8. Energiespeichermodul nach Anspruch 7, **dadurch gekennzeichnet, dass** die Speicherzellen (12) als prismatische Speicherzellen (12) ausgebildet sind.

9. Energiespeichermodul nach Anspruch 7 oder 8, **dadurch gekennzeichnet, dass** die Speicherzellen (12) zwischen den Abschlusselementen (20) der Rahmeneinrichtung (18) entlang der Achse (14) zu einem Speicherzellenstapel (16) gestapelt sind.

10. Energiespeichermodul nach einem der Ansprüche 7 bis 9, **dadurch gekennzeichnet, dass** zwischen den Speicherzellen (12) komprimierbare Zwischenelemente oder feuerfeste Polymerplatten angeordnet sind.

## Claims

1. Frame device (18) for accommodating storage cells (12) of an energy storage module (10), in particular of a battery module, having
- two plate-type closure elements (20), which constitute two ends (22, 24) of the frame device (18) that are opposite one another along an axis (14),
- connection elements (30), which are disposed on mutually opposite sides (26, 28) of the frame device (18) and which extend from one end (22) to the other end (24) of the frame device of the frame device (18) and mechanically connect the two closure elements (20) over a distance, **characterized in that**,
for the purpose of connection to the two closure elements (20), each of the connection elements (30) has, at each of the ends thereof, a pin (42) that is oriented transversely in relation to the axis (14) and that respectively engages in a recess (40) in one of the closure elements (20) and is releasably fixed there by means of a respective catch-type securing element (32).

2. Frame device according to Claim 1, **characterized in that** the catch-type securing elements (32) are realized as
- latching elements (46) realized on the pin (42) or
- as separate securing elements (44) that can be inserted in the closure elements (20) from the outside.

3. Frame device according to Claim 2, **characterized in that** the separate securing elements (44) are realized as securing pins, securing shackles or securing rings.

4. Frame device according to any one of Claims 1 to 3, **characterized in that** respectively two connection elements (30), whose pins (42) are oriented in mutually opposite directions in the closure elements (20), are provided on each of the two mutually opposite sides (26, 28).

5. Frame device according to any one of the preceding claims, **characterized in that** each of the connection elements (30) has an L-shaped cross section and constitutes an edge of the frame device (18).

6. Frame device according to any one of Claims 1 to 5, **characterized in that** at least one of the closure elements (20) has openings (54) for the insertion of connection pins (56).

7. Electrical energy storage module (10), in particular a battery module, having a plurality of electrically interconnected storage cells (12), and having a frame device (18), which surrounds the storage cells (12), **characterized in that** this frame device (18) is realized as a frame device (18) according to any one of the preceding claims.

8. Energy storage module according to Claim 7, **characterized in that** the storage cells (12) are realized as prismatic storage cells (12).

9. Energy storage module according to Claim 7 or 8, **characterized in that** the storage cells (12) are stacked along the axis (14), between the closure elements (20) of the frame device (18), to form a storage-cell stack (16).

10. Energy storage module according to any one of Claims 7 to 9, **characterized in that** compressible intermediate elements or refractory polymer plates are disposed between the storage cells (12).

## Revendications

1. Dispositif de châssis (18) servant à recevoir des cellules de stockage d'énergie (12) d'un module de stockage d'énergie (10), en particulier d'un module de batterie, comprenant
- deux éléments de terminaison (20) en forme de plaque, qui forment deux extrémités (22, 24), se faisant face l'une par rapport à l'autre le long d'un axe (14), du dispositif de châssis (18),
- des éléments de liaison (30) disposés sur des côtés (26, 28) se faisant face du dispositif de châssis (18), lesquels s'étendent depuis ladite extrémité (22) vers l'autre extrémité (24) du dispositif de châssis (18) et relient mécaniquement les deux éléments d'extrémité (20) sur une certaine distance,
**caractérisé en ce que** chacun des éléments de liaison (30) destinés à être reliés aux deux éléments de terminaison (20) comporte, au niveau de chacune de ses extrémités, un tourillon (42) orienté transversalement à l'axe (14), qui s'engage respectivement dans un évidement (40) dans l'un des éléments de terminaison (20) et qui y est fixé de manière amovible au moyen d'un élément de blocage (32) respectif de type verrou.

2. Dispositif de châssis selon la revendication 1, **caractérisé en ce que** les éléments de blocage (32) de type verrou sont réalisés sous la forme
- d'éléments d'encliquetage (46) formés sur le tourillon (42) ou
- d'éléments de blocage (44) séparés qui peuvent être introduits depuis l'extérieur dans les éléments de terminaison (20).

3. Dispositif de châssis selon la revendication 2, **caractérisé en ce que** les éléments de blocage (44) séparés sont réalisés sous la forme de goupilles de blocage, de pinces de blocage ou d'anneaux de blocage.

4. Dispositif de châssis selon l'une des revendications 1 à 3, **caractérisé en ce que** deux éléments de liaison (30) sont respectivement prévus sur chacun des deux côtés (26, 28) se faisant face, dont les tourillons (42) s'étendent dans les éléments de terminaison (20) en étant orientés dans des directions mutuellement opposées.

5. Dispositif de châssis selon l'une des revendications précédentes, **caractérisé en ce que** chacun des éléments de liaison (30) présente une section transversale en forme de L et forme un bord du dispositif de châssis (18).

6. Dispositif de châssis selon l'une des revendications 1 à 5, **caractérisé en ce qu'**au moins l'un des éléments de terminaison (20) présente des ouvertures (54) permettant d'insérer des goupilles de liaison (56).

7. Module de stockage d'énergie électrique (10), en particulier module de batterie, comprenant plusieurs cellules de stockage (12) reliées électriquement les unes aux autres et un dispositif de châssis (18) entourant les cellules de stockage (12), **caractérisé en ce que** ledit dispositif de châssis (18) est réalisé sous la forme d'un dispositif de châssis (18) selon l'une des revendications précédentes.

8. Module de stockage d'énergie selon la revendication 7, **caractérisé en ce que** les cellules de stockage (12) sont réalisées sous la forme de cellules de stockage (12) prismatiques.

9. Module de stockage d'énergie selon la revendication 7 ou 8, **caractérisé en ce que** les cellules de stockage (12) sont empilées entre les éléments de terminaison (20) du dispositif de châssis (18) le long de l'axe (14) pour former un empilement (16) de cellules de stockage.

10. Module de stockage d'énergie selon l'une des revendications 7 à 9, **caractérisé en ce que** des éléments intermédiaires compressibles ou des plaques de polymère réfractaire sont disposés entre les cellules de stockage (12).
